# EUROPÄISCHE PATENTSCHRIFT

(11) **EP 2 240 360 B1**
(45) Veröffentlichungstag und Bekanntmachung des Hinweises auf die Patenterteilung: **08.02.2012**
(21) Anmeldenummer: 08872053.7
(22) Anmeldetag: 09.12.2008
(51) Int. Cl.: B62D 61/12, B62D 63/06, B62D 21/18, B66C 23/42, E04G 21/04

(54) **FAHRBARE ARBEITSMASCHINE**
MOBILE WORKING MACHINE
ENGIN DE TRAVAIL MOBILE

(30) Priorität: 06.02.2008 DE 102008007917
(43) Veröffentlichungstag der Anmeldung: 20.10.2010
(73) Patentinhaber: Putzmeister Engineering GmbH, 72631 Aichtal (DE)
(72) Erfinder: BENZ, Andreas, 73240 Wendlingen (DE); FÜGEL, Dietmar, 72649 Wolfschlugen (DE)
(74) Vertreter: Wolf, Eckhard
(86) Internationale Anmeldenummer: PCT/EP2008/067050
(87) Internationale Veröffentlichungsnummer: WO 2009/097932

(56) Entgegenhaltungen:
- EP-A- 0 038 954
- WO-A-2004/113646
- DE-A1- 19 736 109
- DE-B- 1 091 304
- GB-A- 2 087 816
- GB-A- 2 128 144

## Beschreibung

Die Erfindung betrifft eine fahrbare Arbeitsmaschine mit einem als Sattelzug ausgebildeten, eine mehrachsige Zugmaschine und einen mit dieser mittels einer Sattelkupplung verbundene, die Arbeitsmaschine tragenden mehrachsigen Sattelaufleger aufweisenden Fahrgestell, mit einer an dem Sattelaufleger angeordneten, unter Anheben des Sattelzugs auf einem Untergrund abstützbaren Stützkonstruktion, die zwei an am zugmaschinenseitigen Ende des Sattelauflegers zur Fahrgestelllängsachse symmetrisch angeordneten Lagerstellen zwischen einer zur Fahrgestelllängsachse parallelen Transportstellung und mindestens einer Abstützstellung mittels eines Betätigungsmechanismus verschwenkbare vordere Stützausleger und zwei zwischen einer Transportstellung und mindestens einer Abstützstellung verstellbare rückwärtige Stützausleger aufweist, wobei der Sattelaufleger Mittel zum Anheben und/oder Festhalten der Zugmaschine aufweist.

Es ist eine als Autobetonpumpe ausgebildete fahrbare Arbeitsmaschine dieser Art bekannt (EP 0 038 954B1), bei der die Stützausleger der Stützkonstruktion seitlich am Sattelaufleger so schwenkbar angeordnet sind, dass sie von einer Transportstellung in eine Abstützstellung ausschwenkbar und gegebenenfalls teleskopierbar sind. Ein Riegel sorgt dafür, dass sowohl eine vertikale als auch eine horizontale Kraftübertragung über die Sattelkupplung möglich ist und dass die Zugmaschine dennoch um die vertikale Achse eines Königszapfens gegenüber dem Sattelaufleger verschwenkt werden kann. Ein zusätzlich an der Sattelkupplung vorgesehenes Drehlager erlaubt eine Nickbewegung der Zugmaschine um eine horizontale Querachse gegenüber dem Sattelaufleger. Um die Zugmaschine in der angehobenen Stellung des Fahrgestells als Ballastgewicht zur Stabilisierung des mit den Stützauslegern auf dem Boden abgestützten Sattelauflegers nutzen zu können, sind am feststehenden Teil des Sattelanhängers Mittel zum Anheben der Zugmaschine und deren Festhalten in der angehobenen Stellung vorgesehen, die dort einen mittels eines Hydrozylinders verschwenkbaren Hebel sowie ein zwischen dem Hebel und der Zugmaschine angeordnetes biegeschlaffes Zugorgan aufweisen.

Der Erfindung liegt die Aufgabe zugrunde, eine fahrbare Arbeitsmaschine mit einem als Sattelzug ausgebildeten Fahrgestell der eingangs angegebenen Art dahingehend zu verbessern, dass das An- und Abkuppeln der Zugmaschine am oder vom Sattelaufleger erleichtert wird.

Zur Lösung dieser Aufgabe wird die im Anspruch 1 angegebene Merkmalskombination vorgeschlagen. Vorteilhafte Ausgestaltungen und Weiterbildungen der Erfindung ergeben sich aus den abhängigen Ansprüchen.

Der Erfindung liegt der Gedanke zugrunde, dass die über die Sattelkupplung mit dem Sattelaufleger verbundene, und um die vertikale Achse des Königszapfens gegenüber dieser verschwenkbare Zugmaschine beim Abstützvorgang zusammen mit dem Sattelaufleger mit einfachen Mitteln vom Boden abgehoben werden und als Ballastgewicht genutzt werden kann. Um dies zu ermöglichen, wird gemäß der Erfindung vorgeschlagen, dass die Lagerstellen der Stützausleger einen achszentralen durchgehenden Hohlraum aufweisen, und dass die am Sattelaufleger angeordneten Mittel zum Anheben und Festhalten der Zugmaschine je ein durch den zentralen Hohlraum der Lagerstellen von oben nach unten hindurchgreifendes und an der Zugmaschine fixierbares Hubglied aufweisen. Der Hohlraum für das Hubglied ist dabei zweckmäßig in einem stützauslegerfesten Lagerzapfen angeordnet.

Eine bevorzugte Ausgestaltung der Erfindung sieht vor, dass die mittels je eines Motors heb- und senkbaren Hubglieder an ihrem unteren Ende ein Kupplungsorgan tragen, und dass die Zugmaschine einen Hilfsrahmen aufweist, an welchem die Kupplungsorgane der Hubglieder arretierbar sind. Die Hubglieder sind dabei zweckmäßig über je einen Gewindetrieb mit dem zugehörigen Motor gekuppelt, wobei der Gewindetrieb vorzugsweise als Trapezgewinde ausgebildete Gewindepartien aufweist.

Eine weitere bevorzugte Ausgestaltung der Erfindung sieht vor, dass die Sattelkupplung einen mittig angeordneten, eine vertikale Schwenkachse zwischen Zugmaschine und Sattelaufleger bildender Königszapfen aufweist, und dass der Hilfsrahmen im Umriss teilkreisförmig ausgebildet und konzentrisch zum Königszapfen angeordnet ist und mehrere, in Umfangsrichtung im Abstand voneinander angeordnete Arretierungsstellen für die Kupplungsorgane der Hubglieder aufweist. Mit dieser Maßnahme ist es besonders einfach möglich, die Zugmaschine in verschiedenen, gegenüber dem Sattelaufleger ausgerichteten Abwinkelungen im Zuge des Abstützvorgangs vom Boden abzuheben. Vorteilhafterweise werden die Kupplungsorgane mittels Steckbolzen an den Arretierungsstellen des Hilfsrahmens fixiert. Die Kupplungsorgane sind zu diesem Zweck als dreh- und/oder schwenkbar am Hubglied angeordnete Ovalringe ausgebildet, die in eine teilkreisförmige Kulissenführung des Hilfsrahmens einführbar und dort an den Arretierungsstellen fixierbar sind. Die Arretierungsstellen bilden dabei ein in Umfangsrichtung verlaufendes Lochraster im Hilfsrahmen, an deren Löchern die Ovalringe mittels Steckzapfen fixierbar sind. Mit den am Hilfsrahmen angekuppelten Hubgliedern wird erreicht, dass die Räder der Zugmaschine beim Abstützvorgang vom Boden abgehoben werden können. Im Fahrzustand sorgt die Sattelkupplung dafür, dass die Zugmaschine gegenüber dem Sattelaufleger eine Nickbewegung ausführen kann, um Fahrbahnunebenheiten überwinden zu können. Dazu müssen die Kupplungsorgane der Hubglieder vom Hilfsrahmen abgekuppelt zu sein. Um Beschädigungen im Fahrzustand zu vermeiden, können die Kupplungsorgane motorisch über das jeweilige Hubglied in den Hohlraum der zugehörigen Lagerstellen eingezogen werden.

Vor allem bei großen Sattelzügen steht zwischen dem stirnseitigen Ende des Sattelauflegers und dem Fahrerhaus des Sattelzugs ein ausreichend großer Freiraum zur Verfügung, der zur Unterbringung wesentlicher Teile des Betätigungsmechanismus für die vorderen Stützausleger ausreicht, so dass sich die Höhe des Sattelauflegers und von dessen Aufbau reduzieren lässt. Dies ist von besonderem Vorteil, wenn im Falle von Autobetonpumpen ein großer Verteilermast mit einer Gesamtlänge von 65 m und mehr auf dem Sattelaufleger untergebracht werden soll. Um dies zu erreichen, wird gemäß einer vorteilhaften Ausgestaltung der Erfindung vorgeschlagen, dass der Betätigungsmechanismus eines jeden vorderen Stützauslegers eine sich über die Stirnseitenpartie des Sattelauflegers erstreckende, als Hydrozylinder ausgebildete Zylinder-Kolbeneinheit aufweist, die an ihrem einen Ende unmittelbar an einem sattelauflegerfesten Lagerauge und an ihrem anderen Ende mittelbar über ein Umlenkgetriebe am zugehörigen Stützausleger angelenkt ist.

Eine bevorzugte Ausgestaltung der Erfindung sieht vor, dass die den beiden vorderen Stützauslegern zugeordneten Zylinder-Kolbeneinheiten an der Stirnseite des Sattelauflegers nach einander entgegengesetzten Seiten weisend übereinander angeordnet sind. Da die Zylinder-Kolbeneinheiten an ihren beiden Enden um zur Hochachse parallele Gelenkachsen verschwenkbar sind, greifen sie im Zuge des Ausstellvorgangs der vorderen Stützausleger schräg in den Freiraum zwischen der Stirnseite des Sattelauflegers und dem Fahrerhaus ein. Vorteilhafterweise sind die sattelauflegerfesten Lageraugen der den beiden vorderen Stützauslegern zugeordneten Zylinder-Kolbeneinheiten auf der dem jeweils anderen vorderen Stützausleger zugewandten Seite des Sattelauflegers vorzugsweise in der Nähe der zugehörigen Lagerstelle angeordnet.

Eine weitere bevorzugte Ausgestaltung der Erfindung sieht vor, dass das dem Betätigungsmechanismus eines jeden Stützauslegers zugeordnete Umlenkgetriebe einen mit seinem einen Ende an einem sattelauflegerfesten Gelenk um eine zur Ausstellachse des Stützauslegers parallele Gelenkachse verschwenkbaren Umlenkhebel aufweist, der an seinem anderen Ende Anlenkstellen aufweist, an denen die Zylinder-Kolbeneinheit sowie das eine Ende einer starren Ausstellstange angelenkt sind, wobei die Ausstellstange mit ihrem anderen Ende an einer im Abstand von der Lagerstelle angeordneten Anlenkstelle des Stützauslegers angelenkt ist. Zweckmäßig sind die am Umlenkhebel befindlichen Anlenkstellen für die Zylinder-Kolbeneinheit und die Ausstellstange in einem kleinen Abstand voneinander angeordnet. Um den Betätigungsmechanismus klemmungsfrei betätigen zu können, sollten alle Lager- und Gelenkachsen des Betätigungsmechanismus parallel zur Ausstellachse des zugehörigen Stützauslegers ausgerichtet sein.

Aufgrund der Kinematik des erfindungsgemäßen Betätigungsmechanismus würde eine konstante Druckölzufuhr zur Zylinder-Kolbeneinheit zu einer ungleichförmigen Winkelgeschwindigkeit beim Ausschwenken der vorderen Stützbeine führen. Insbesondere käme es zu Beginn eines jeden Ausstellvorgangs von der Transportstellung der Stützausleger aus schon bei einem kleinen Verstellweg der Zylinder-Kolbeneinheit zu einem relativ großen Schwenkweg des Stützauslegers. Um dies zu vermeiden, wird gemäß einer bevorzugten Ausgestaltung der Erfindung vorgeschlagen, dass die Druckölzufuhr zur Zylinder-Kolbeneinheit in Abhängigkeit von der Winkelstellung des zugehörigen vorderen Stützauslegers oder Umlenkhebels veränderbar ist. Vorteilhafterweise erfolgt dies automatisch dadurch, dass in einer Druckmittelzuführleitung zur Zylinder-Kolbeneinheit ein Drosselventil angeordnet ist, das über ein in einer definierten Winkelstellung des Stützauslegers oder des Umlenkhebels ansprechendes Schaltorgan umsteuerbar ist.

Um sowohl eine Normalabstützung als auch eine Schmalabstützung der Stützausleger zu ermöglichen, weisen die Stützausleger in einer ersten, eine Normalstellung definierenden Abstützstellung, einen lösbaren Anschlag und in einer zweiten Abstützstellung einen Endanschlag auf.

Gemäß einer bevorzugten Ausgestaltung der Erfindung ist die Arbeitsmaschine als Betonpumpe ausgebildet, die ein auf dem Sattelaufleger angeordnetes Pumpaggregat mit Materialaufgabebehälter sowie eine an den Druckausgang des Pumpaggregats angeschlossene, über einen Verteilermast geführte Förderleitung aufweist.

Die als Betonpumpe ausgebildete Arbeitsmaschine und die Stützausleger der Stützkonstruktion samt Betätigungsmechanismus sind zweckmäßig an mindestens einem Aufbaurahmen angeordnet, der mit einem den Sattelaufleger bildenden Chassis verbunden ist. Auf dem Aufbaurahmen ist vorteilhafterweise ein vom Antrieb der Zugmaschine unabhängiger Verbrennungsmotor für den Antrieb der zur Betonpumpe gehörenden Hydraulikaggregate angeordnet.

Im Folgenden wird die Erfindung anhand eines in der Zeichnung in schematischer Weise dargestellten Ausführungsbeispiels näher erläutert. Es zeigen
- Fig. 1: eine schaubildliche Darstellung einer fahrbaren Betonpumpe im Zustand der Straßenfahrt mit eingeschwenkten Stützbeinen und zusammengeklapptem Verteilermast;
- Fig. 2a: eine Draufsicht auf den vorderen Teil der fahrbaren Betonpumpe mit abgenommenem Verteilermast und eingeschwenkten vorderen Stützbeinen;
- Fig. 2b: eine schaubildliche Darstellung des vorderen Teils der fahrbaren Betonpumpe nach Fig. 1 mit ausgeschwenkten vorderen Stützbeinen;
- Fig. 3a bis c: eine schaubildliche Darstellung, eine Stirnseitenansicht und eine Draufsicht des vorderen Teils des Sattelauflegers mit eingeschwenkten Stützbeinen;
- Fig. 4a und: b eine ausschnittsweise stirnseitige Vorderansicht und Untenansicht des Sattelauflegers mit einem in Normalstellung ausgeschwenkten vorderen Stützbein jeweils in schaubildlicher Darstellung;
- Fig. 5a und b: Darstellungen entsprechend Fig. 4a und b mit einem in Schmalabstützposition ausgeschwenkten vorderen Stützbein;
- Fig. 6a: eine ausschnittsweise schaubildliche Darstellung der Sattelzugmaschine mit Hilfsrahmen und Hubmechanismus;
- Fig. 6b: eine Seitenansicht der Sattelkupplung der Sattelzug-Betonpumpe in teilweise geschnittener Darstellung;
- Fig. 7a und b: eine Seitenansicht und eine Schnittdarstellung des Hubmechanismus gemäß Fig. 6a;

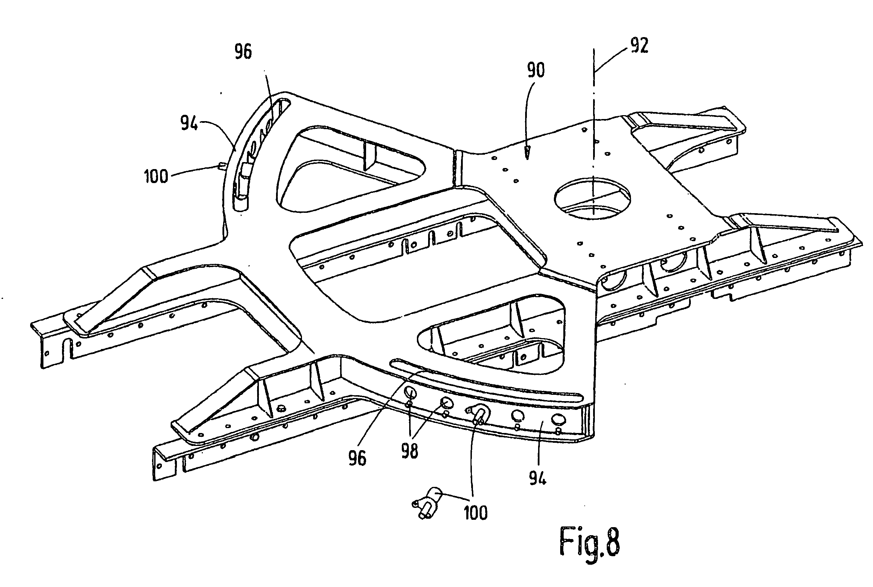

- Fig. 8: eine schaubildliche Darstellung des von der Zugmaschine abgenommenen Hilfsrahmens.

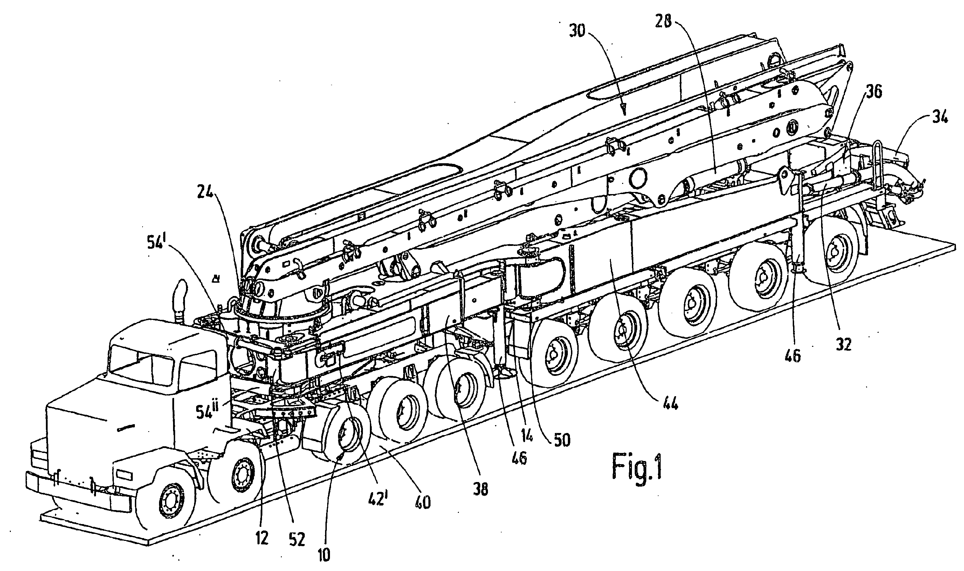

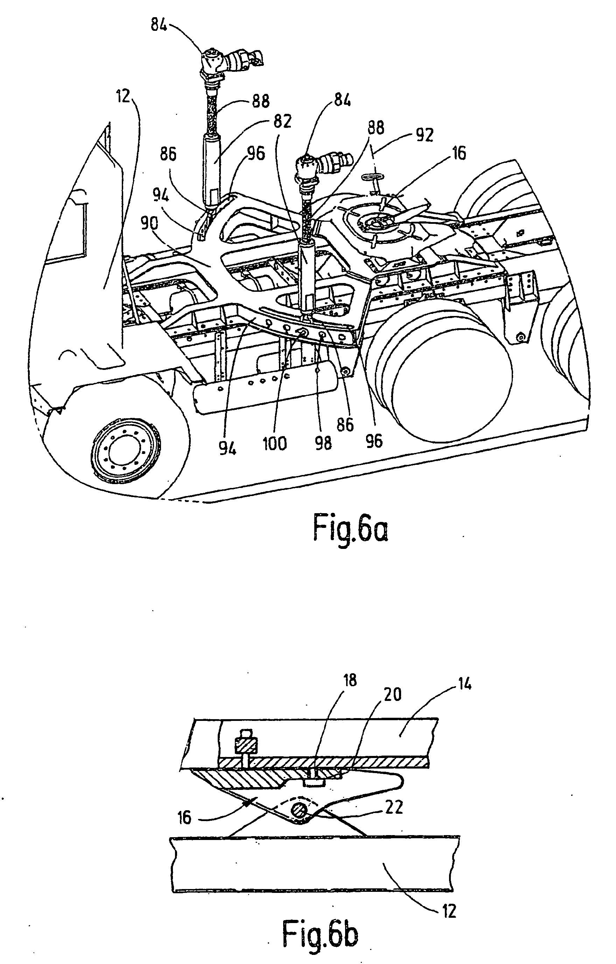

Die in Fig. 1 dargestellte fahrbare Arbeitsmaschine ist als Autobetonpumpe ausgebildet, die ein als Sattelzug ausgebildetes Fahrgestell 10 bestehend aus einer fünfachsigen Zugmaschine 12 und einem fünfachsigen Sattelaufleger 14 aufweist. Die Zugmaschine 12 ist über eine an sich bekannte Sattelkupplung 16 mit den Königszapfen 18 des Sattelauflegers 14 lösbar verbunden (vgl. Fig. 6b). Der Riegel 20 sorgt dafür, dass sowohl eine vertikale als auch eine horizontale Kraftübertragung über die Kupplung möglich ist und dass die Zugmaschine 12 dennoch um die vertikale Achse des Königszapfens 18 gegenüber dem Sattelaufleger 14 verschwenkt werden kann. Das zusätzlich an der Sattelkupplung 16 vorgesehene Drehlager 22 erlaubt eine Nickbewegung der Zugmaschine 12 um eine horizontale Querachse gegenüber dem Sattelaufleger 14.

Auf dem Sattelaufleger 14 ist im vorderen Bereich ein an einem Drehturm 24 angelenkter und mit diesem mittels eines Zahnradgetriebes 26 um eine vertikale Achse motorisch drehbarer, mit hydraulischen Mitteln 28 auseinanderklappbarer Verteilermast 30 angeordnet, dessen Betonleitung 32 über einen Materialaufgabebehälter 34 und ein Pumpaggregat 36 mit dem zu fördernden Flüssigbeton beaufschlagbar ist.

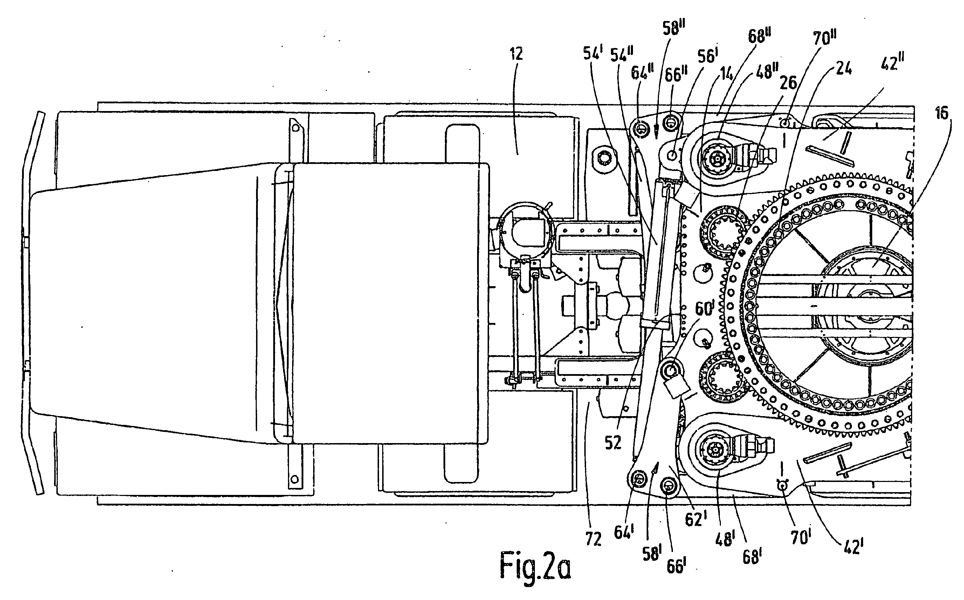

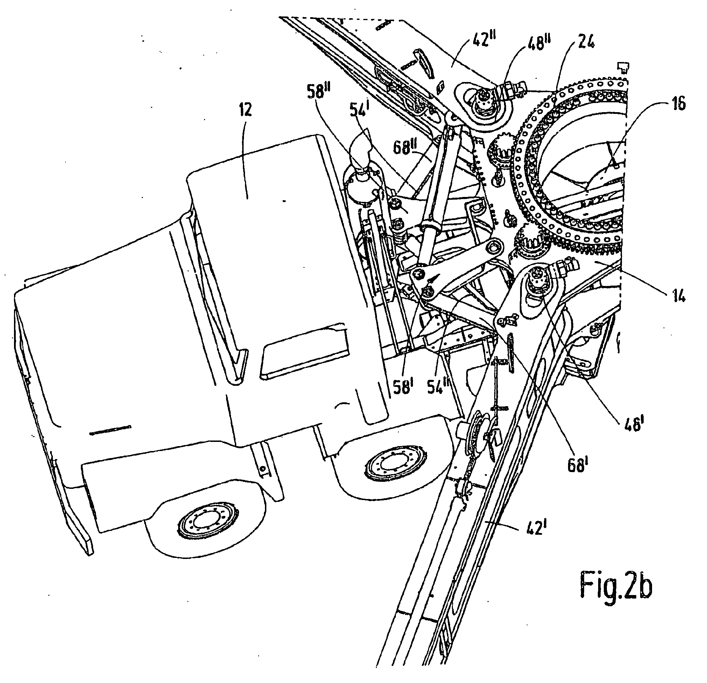

Im Bereich des Sattelauflegers 14 ist eine Stützkonstruktion 38 angeordnet, die unter Anheben des gesamten Sattelzugs auf einem Untergrund 40 abstützbar ist. Die Stützkonstruktion 38 weist zwei vordere Stützausleger 42', 42" und zwei rückwärtige Stützausleger 44 auf, die mittels je eines am freien Auslegerende nach unten weisenden, teleskopierbaren Stützfußes 46 auf dem Untergrund 40 abstützbar sind. Die vorderen Stützausleger 42', 42" sind an zwei am zugmaschinenseitigen Ende des Sattelauflegers 14 symmetrisch zur Fahrgestelllängsachse angeordneten Lagerstellen 48', 48" zwischen einer zur Fahrgestelllängsachse parallelen Transportstellung (Fig. 2a) und mindestens einer Abstützstellung (Fig. 2b) verschwenkbar, während die rückwärtigen Stützausleger 44 an im mittleren Bereich des Sattelauflegers 14 angeordneten rückwärtigen Lagerstellen 50 zwischen einer Transportstellung und mindestens einer seitlich ausgeschwenkten Abstützstellung verschwenkbar sind. Das Ausstellen der vorderen und rückwärtigen Stützausleger erfolgt mit hydraulischen Mitteln unter Verwendung je eines Hydrozylinders und eines geeigneten Umlenkgetriebes.

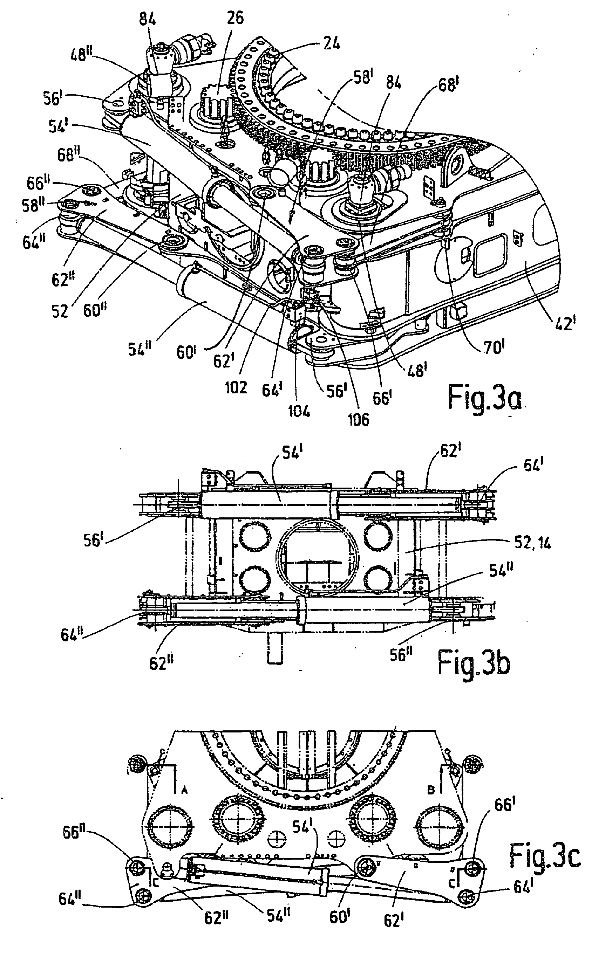

Eine Besonderheit der Erfindung besteht darin, dass der Betätigungsmechanismus eines jeden vorderen Stützauslegers 42', 42" eine sich über die Stirnseitenpartie 52 des Sattelauflegers 14 erstreckende, als Hydrozylinder ausgebildete Zylinder-Kolbeneinheit 54', 54" aufweist, die an ihrem einen Ende unmittelbar an einem sattelauflegerfesten Lagerauge 56', 56" und an ihrem anderen Ende mittelbar über ein Umlenkgetriebe 58', 58" am zugehörigen vorderen Stützausleger 42', 42" angelenkt ist. Wie insbesondere aus Fig. 3a bis c zu ersehen ist, sind die den beiden vorderen Stützauslegern 42', 42" zugeordneten Zylinder-Kolbeneinheiten 54', 54" im Bereich der Stirnseitenpartie 52 des Sattelauflegers 14 nach einander entgegengesetzten Seiten weisend übereinander angeordnet, wobei die sattelauflegerfesten Lageraugen 56', 56" der den beiden vorderen Stützauslegern 42', 42" zugeordneten Zylinder-Kolbeneinheiten 54', 54" in der Nähe der Lagerstelle 48", 48' des jeweils anderen vorderen Stützauslegers 42", 42' angeordnet sind. Das dem Betätigungsmechanismus eines jeden vorderen Stützauslegers 42', 42" zugeordnete Umlenkgetriebe 58', 58" weist einen mit seinem einen Ende an einem sattelauflegerfesten Gelenk 60', 60" um eine zur Ausstellachse im Bereich der Lagerstellen 48', 48" des zugehörigen Stützauslegers parallele Gelenkachse verschwenkbaren Umlenkhebel 62', 62" auf, der an seinem anderen Ende jeweils zwei Anlenkstellen 64', 66' bzw. 64", 66" aufweist. An den Anlenkstellen 64', 64" ist jeweils das zweite Ende der Zylinder-Kolbeneinheit 54', 54" angelenkt, während an der anderen Anlenkstelle 66', 66" das eine Ende einer starren Ausstellstange 68', 68" angelenkt ist, wobei die Ausstellstangen 68', 68" mit ihrem anderen Ende an einem im Abstand von der Lagerstelle 48', 48" befindlichen Anlenkstelle 70', 70" des zugehörigen vorderen Stützauslegers 42', 42" angelenkt sind. Die Anlenkstellen 64', 66' bzw. 64", 66" sind jeweils im Abstand voneinander am Umlenkhebel 62' bzw. 62" angeordnet. Die Kinematik der Betätigungsmechanismen für die vorderen Stützausleger 42', 42" lässt sich am besten anhand der Fig. 3a bis c, 4a und b sowie 5a und b erläutern. In der Transportstellung gemäß Fig. 3a bis c weisen die vorderen Stützausleger 42', 42" parallel zur Fahrgestelllängsachse nach hinten und liegen dort gegen die Seitenflanken des Sattelauflegers 14 an. In dieser Stellung befinden sich die Zylinder-Kolbeneinheiten 54', 54" in ihrer ausgefahrenen Endstellung, so dass sie mit dem zugehörigen Umlenkhebel 62', 62" ihren kleinsten Winkel einschließen, während die Ausstellstangen 68', 68" ihren größten Winkeln mit dem Umlenkhebel 62', 62" einschließen.

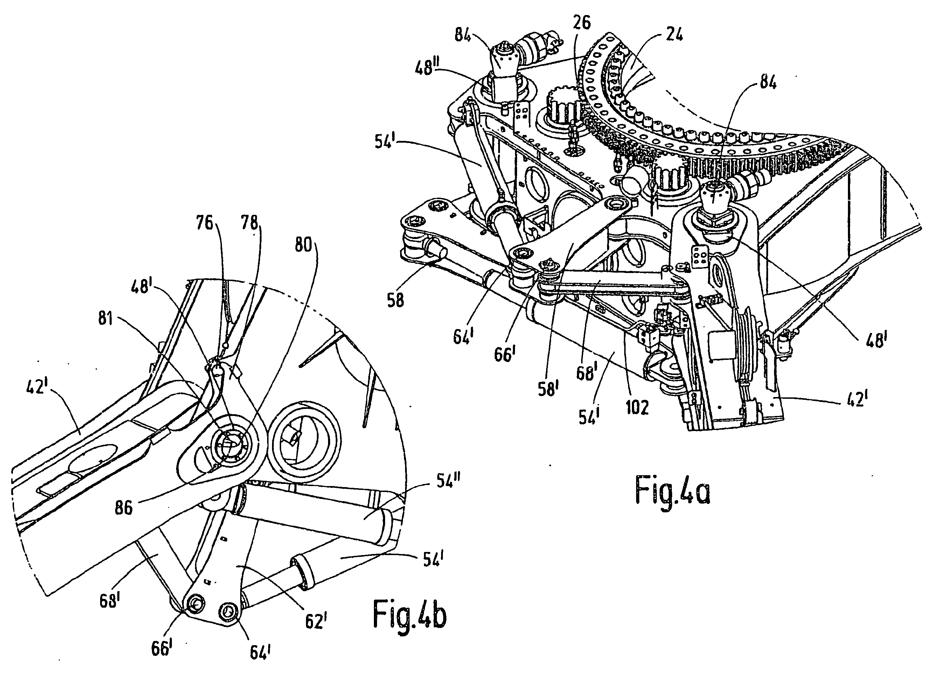

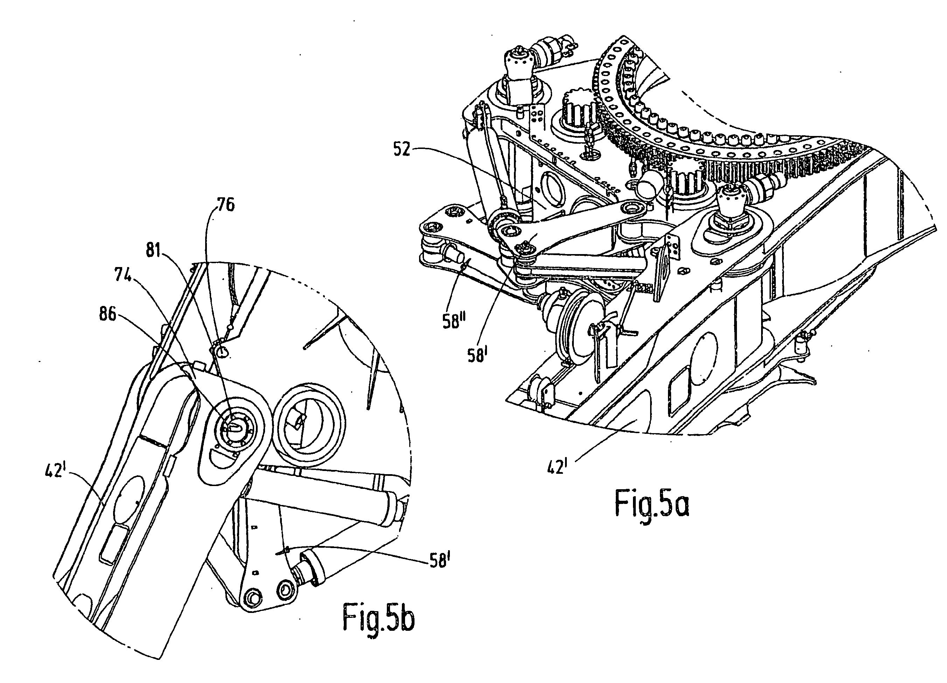

Im Zuge des Ausstellvorgangs wird die Zylinder-Kolbeneinheit 54' durch Einziehen der Kolbenstange verkürzt. Gleichzeitig wird hierbei der zugehörige Umlenkhebel 62' nach vorne in den Freiraum 72 zwischen dem Sattelaufleger 14 und der Zugmaschine 12 verschwenkt, so dass der vordere Stützausleger 42' über die Ausstellstange 68' seitlich nach außen geschwenkt wird. In der in Fig. 4a und b gezeigten Schwenklage hat der Stützausleger 42' eine erste Abstützposition erreicht, die der so genannten Normalabstützung entspricht. In dieser Position schlägt der Stützausleger 42' mit einem Anschlagarm 74 gegen einen fahrgestellfesten Anschlag 76 an. Wie aus Fig. 4a und b zu ersehen ist, ist die Zylinder-Kolbeneinheit 54' in dieser Position noch nicht vollständig eingefahren. Dementsprechend lässt sich von der Position gemäß Fig. 4a und b aus durch weitere Verkürzung der Zylinder-Kolbeneinheit 54' eine zusätzliche Abstützposition gemäß Fig. 5a und b anfahren, bei der das vordere Stützbein 42' eng zur Zugmaschine 12 herangeschwenkt wird. Es handelt sich hierbei um die so genannte Schmalabstützung, die für enge Aufstellräume gewählt werden kann. Um diese Abstützposition zu erreichen, muss zuvor der Anschlag 76 von Hand gelöst werden, damit er von dem Anschlagarm 74 überfahren werden kann (vgl. Fig. 5b). In der Schmalabstützung gelangt die Zylinder-Kolbeneinheit 54' in ihre eingefahrene Endlage, während der Umlenkhebel 62' zusammen mit der Ausstellstange 68' noch weiter in den Freiraum 72 hineingeschwenkt wird und diesen in seiner Weite nahezu vollständig nutzen. Eine entsprechende Kinematik ergibt sich auch für den Stützausleger 42" und dessen Betätigungsmechanismus.

Aufgrund der Kinematik des Betätigungsmechanismus würde eine konstante Druckölzufuhr zur Zylinder-Kolbeneinheit 54', 54" zu einer ungleichförmigen Winkelgeschwindigkeit beim Ausschwenken der vorderen Stützbeine 42', 42" führen. Um dies zu vermeiden, wird die Druckölzufuhr zur Zylinder-Kolbeneinheit 54', 54" in Abhängigkeit von der Winkelstellung des zugehörigen vorderen Stützauslegers 42', 42" oder des Umlenkhebels 62', 62" variiert. Dies erfolgt beispielsweise dadurch, dass in einer Druckmittelzuführleitung 102 zur Zylinder-Kolbeneinheit 54', 54" ein Drosselventil 104 angeordnet ist, das über ein in einer definierten Winkelstellung des Stützauslegers 42', 42" ansprechendes Schaltorgan 106 ansteuerbar ist.

Um eine sichere Abstützung zu gewährleisten, werden die vorderen und rückwärtigen Stützausleger der Stützkonstruktion 38 nacheinander in ihre Abstützstellung gebracht und dort gesichert. Dies erfolgt mit Hilfe einer vom Bediener betätigten Fernbedienung.

Die vorstehend beschriebenen, die Betonpumpe und die Stützkonstruktion betreffenden Aufbauten befinden sich zweckmäßig an mindestens einem Aufbaurahmen, der in teilweise vormontiertem Zustand auf das Chassis des Sattelauflegers aufgesetzt und mit diesem verbunden wird.

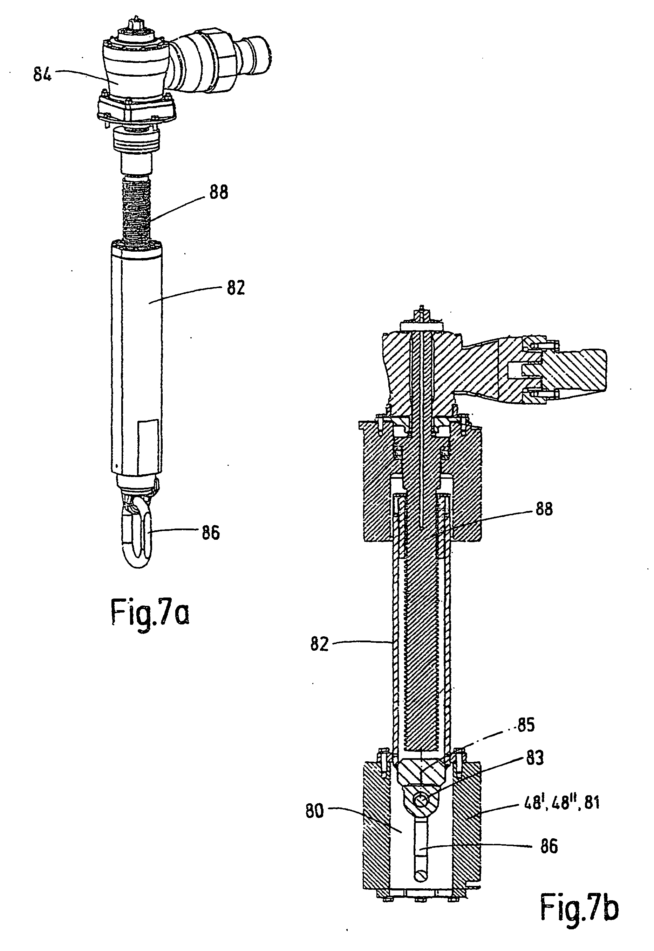

Eine Besonderheit der einen Sattelzug als Fahrgestell 10 aufweisenden fahrbaren Arbeitsmaschine besteht darin, dass die Zugmaschine 12 und der Sattelaufleger 14 über die Sattelkupplung 16 in mehreren Freiheitsgraden gegeneinander verschwenkt werden können. Da andererseits das Gewicht der Zugmaschine 12 vor allem bei Betonpumpen mit großen Verteilermasten 30 in der angehobenen Stellung als Ballastgewicht zur Stabilisierung des mit den Stützauslegern 42', 42", 44 auf dem Untergrund 40 abgestützten Sattelauflegers 14 benötigt wird, bedarf es zusätzlicher Vorkehrungen. Diese bestehen vor allem darin, dass der Sattelaufleger 14 besondere Mittel zum Anheben und Festhalten der Zugmaschine 12 aufweist. Um den Platzbedarf für diese Mittel so klein wie möglich zu halten, besteht eine Besonderheit der Erfindung darin, dass die Lagerstellen 48', 48" der vorderen Stützausleger 42', 42" einen achszentralen durchgehenden Hohlraum 80 aufweisen und dass die am Sattelaufleger 14 angeordneten Mittel zum Anheben und Festhalten der Zugmaschine 12 je ein durch den zentralen Hohlraum 80 der Lagerstelle 48', 48" von oben nach unten hindurchgreifendes, an der Zugmaschine 12 fixierbares Hubglied 82 aufweisen. Der Hohlraum 80 befindet sich dabei zweckmäßig in einem stützauslegerfesten Lagerzapfen 81. Die Hubglieder 82 sind mittels je eines Hydromotors 84 relativ zum Sattelaufleger 14 heb- und senkbar angeordnet und tragen an ihrem unteren Ende ein Kupplungsorgan 86. Die Hubglieder 82 ihrerseits sind über je einen Gewindetrieb 88, dessen Gewindepartien als Trapezgewinde ausgebildet sind, mit dem zugehörigen Hydromotor 84 gekoppelt. Wie insbesondere aus Fig. 7a und b zu ersehen ist, ist das Kupplungsorgan 86 als am unteren Ende des Hubglieds 82 angelenkter Ovalring ausgebildet, der gegenüber dem Hubglied 82 um dessen Längsachse verdrehbar und um eine Querachse 83 verschwenkbar ist.

Um die Hubglieder 82 mit ihren Kupplungsorganen 86 in der Abstützstellung mit der Zugmaschine 12 verbinden zu können, weist die Zugmaschine 12 einen Hilfsrahmen 90 auf, der zwei teilkreisförmige, zur Hochachse 92 des Königszapfens 18 konzentrische Segmente 94 aufweist, die ihrerseits mit entsprechend teilkreisförmig gebogenen, nach oben offenen Langlöchern 96 und mit seitlichen, im Rasterabstand voneinander angeordneten, als Löcher 98, ausgebildeten Arretierungsstellen versehen sind. Die Kupplung der Hubglieder 82 mit der Zugmaschine 12 erfolgt dadurch, dass die als Ovalringe ausgebildeten Kupplungsorgane 86 durch jeweils eines der Langlöcher 96 in das zugehörige Segment 94 des Hilfsrahmens 90 eingeführt und an einer der Arretierungsstellen 98 mit einem Steckbolzen 100 am Hilfsrahmen 90 fixiert werden. Mit diesen Maßnahmen ist es möglich, die Zugmaschine 12 unter verschiedenen Drehwinkeln um die Hochachse 92 mit dem Sattelaufleger 14 zu kuppeln. Dies hat sich als besonders vorteilhaft erwiesen, weil beim Aufstellen eines Sattelzugs an einer Abstützposition die Zugmaschine 12 nicht stets parallel zum Sattelaufleger 14 ausgerichtet sein wird. In der gekuppelten Stellung bilden die Hubglieder 82 und die Sattelkupplung 16 ein Verbindungsdreieck, das dafür sorgt, dass bei der Abstützung des Sattelauflegers 14 über die Stützkonstruktion alle Räder der Zugmaschine 12 vom Untergrund 40 abgehoben werden.

Im Fahrzustand werden die Hubglieder 82 über die Hydromotoren 84 nach dem Entfernen der Steckbolzen 100 so weit angehoben, dass die Kupplungsorgane 86 in den Hohlraum 80 zurückgezogen sind (Fig. 7b). In diesem Zustand sind die Zugmaschine 12 und der Sattelaufleger 14 in den Freiheitsgraden der Sattelkupplung 16 gegeneinander beweglich.

Zusammenfassend ist folgendes festzuhalten: Die Erfindung bezieht sich auf eine fahrbare Arbeitsmaschine, insbesondere eine Autobetonpumpe, mit einem als Sattelzug ausgebildeten Fahrgestell 10. Der Sattelzug weist eine Zugmaschine 12 und einen mit dieser mittels einer Sattelkupplung 16 verbundenen, die Arbeitsmaschine tragenden mehrachsigen Sattelaufleger 14 auf. Im Bereich des Sattelauflegers 14 befindet sich eine unter Anheben des Sattelzugs auf einem Untergrund 40 abstützbare Stützkonstruktion 38. Die Stützkonstruktion 38 umfasst zwei vordere Stützausleger 42', 42" und zwei rückwärtige Stützausleger 44, die jeweils zwischen einer Transportstellung und mindestens einer Abstützstellung gegenüber dem Sattelaufleger verschwenkbar sind. Weiter sind am Sattelaufleger 14 Mittel zum Anheben und Festhalten der Zugmaschine 12 angeordnet, so dass die Zugmaschine 12 in der Abstützstellung ein Ballastgewicht zur Stabilisierung des mit der Stützkonstruktion 38 auf dem Untergrund 40 abgestützten Sattelauflegers 14 bildet. Die Erfindung sieht vor, dass die Lagerstellen 48', 48" der vorderen Stützausleger 42', 42" einen achszentralen durchgehenden Hohlraum 80 aufweisen und dass die am Sattelaufleger 14 angeordneten Mittel zum Anheben und Festhalten der Zugmaschine je ein durch den zentralen Hohlraum 80 der Lagerstelle 48', 48" von oben nach unten hindurchgreifendes, an der Zugmaschine 12 lösbar fixierbares Hubglied 82 aufweisen.

## Patentansprüche

1. Fahrbare Arbeitsmaschine mit einem als Sattelzug ausgebildeten, eine mehrachsige Zugmaschine (12) und einen mit dieser mittels einer Sattelkupplung (16) verbundenen, die Arbeitsmaschine tragenden mehrachsigen Sattelaufleger (14) aufweisenden Fahrgestell (10), mit einer im Bereich des Sattelauflegers (14) angeordneten, unter Anheben des Sattelzugs auf einem Untergrund abstützbaren Stützkonstruktion (38), die zwei an am zugmaschinenseitigen Ende des Sattelauflegers (14) zur Fahrgestelllängsachse symmetrisch angeordneten Lagerstellen (48', 48") zwischen einer Transportstellung und mindestens einer Abstützstellung mittels je eines hydraulisch angetriebenen Betätigungsmechanismus verschwenkbare vordere Stützausleger (42', 42") und zwei zwischen einer Transportstellung und mindestens einer Abstützstellung verschwenkbare rückwärtige Stützausleger (44) aufweist, wobei der Sattelaufleger (14) Mittel zum Anheben und Festhalten der Zugmaschine (12) aufweist, **dadurch gekennzeichnet, dass** die Lagerstellen (48', 48") der vorderen Stützausleger (42', 42") einen achszentralen durchgehenden Hohlraum (80) aufweisen und dass die am Sattelaufleger (14) angeordneten Mittel zum Anheben und Festhalten der Zugmaschine je ein durch den zentralen Hohlraum (80) der Lagerstelle (48', 48") von oben nach unten hindurchgreifendes, an der Zugmaschine (12) lösbar fixierbares Hubglied (82) aufweisen.

2. Fahrbare Arbeitsmaschine nach Anspruch 1, **dadurch gekennzeichnet, dass** der Hohlraum (80) in einem stützauslegerfesten Lagerzapfen (81) angeordnet ist.

3. Fahrbare Arbeitsmaschine nach Anspruch 1 oder 2, **dadurch gekennzeichnet, dass** die mittels je eines Motors (84) heb- und senkbaren Hubglieder (82) an ihrem unteren Ende ein Kupplungsorgan (88) tragen und dass die Zugmaschine (12) einen Hilfsrahmen (90) trägt, an welchem die Kupplungsorgane (86) der Hubglieder (82) arretierbar sind.

4. Fahrbare Arbeitsmaschine nach Anspruch 3, **dadurch gekennzeichnet, dass** die Hubglieder (82) über je einen Gewindetrieb (88) mit dem zugehörigen Motor (84) gekuppelt sind.

5. Fahrbare Arbeitsmaschine nach Anspruch 4, **dadurch gekennzeichnet, dass** der Gewindetrieb (88) an seinen Gewindepartien als Trapezgewinde ausgebildet ist.

6. Fahrbare Arbeitsmaschine nach einem der Ansprüche 3 bis 5, **dadurch gekennzeichnet, dass** die Sattelkupplung (16) einen mittig angeordneten Königszapfen (18) aufweist, und dass der Hilfsrahmen (90) im Umriss teilkreisförmig ausgebildet und konzentrisch zur Achse (92) des Königszapfens (18) angeordnet ist und mehrere in Umfangsrichtung im Abstand voneinander angeordnete Arretierungsstellen (98) für die Kupplungsorgane (86) der Hubglieder (82) aufweist.

7. Fahrbare Arbeitsmaschine nach Anspruch 6, **dadurch gekennzeichnet, dass** die Kupplungsorgane (86) mittels Steckbolzen (100) an den Arretierungsstellen (98) fixierbar sind.

8. Fahrbare Arbeitsmaschine nach Anspruch 6 oder 7, **dadurch gekennzeichnet, dass** die Kupplungsorgane (86) als dreh- und schwenkbar am Hubglied (82) angeordnete Ovalringe ausgebildet sind und in teilkreisförmige Längslöcher (96) des Hilfsrahmens (90) eingreifen, und dass die Arretierungsstellen (98) ein in Umfangsrichtung verlaufendes Lochraster im Hilfsrahmen (90) bilden, an deren Löchern die Kupplungsorgane (86) mittels Steckbolzen (100) fixierbar sind.

9. Fahrbare Arbeitsmaschine nach einem der Ansprüche 1 bis 8, **dadurch gekennzeichnet, dass** die Kupplungsorgane (86) in der Transportstellung motorisch über das Hubglied (82) in den Hohlraum (80) der zugehörigen Lagerstellen (48', 48") eingezogen sind.

10. Fahrbare Arbeitsmaschine nach einem der Ansprüche 1 bis 9, **dadurch gekennzeichnet, dass** der Betätigungsmechanismus eines jeden vorderen Stützauslegers (42', 42") eine sich über eine Stirnseitenpartie (52) des Sattelauflegers (14) erstreckende, als Hydrozylinder ausgebildete Zylinder-Kolbeneinheit (54', 54") aufweist, die an ihrem einen Ende unmittelbar an einem sattelauflegerfesten Lagerauge (56', 56") und an ihrem anderen Ende mittelbar über ein Umlenkgetriebe (58', 58") an dem zugehörigen Stützausleger (42', 42") angelenkt ist.

11. Fahrbare Arbeitsmaschine nach Anspruch 10, **dadurch gekennzeichnet, dass** die den beiden vorderen Stützauslegern (42', 42") zugeordneten Zylinder-Kolbeneinheiten (54', 54") an der Stirnseite (52) des Sattelauflegers (14) nach einander entgegengesetzten Seiten weisend übereinander angeordnet sind.

12. Fahrbare Arbeitsmaschine nach Anspruch 10 oder 11, **dadurch gekennzeichnet, dass** die sattelauflegerfesten Lageraugen (56', 56") der den beiden vorderen Stützauslegern (42', 42") zugeordneten Zylinder-Kolbeneinheiten (54',54") auf der dem jeweils anderen vorderen Stützausleger (42", 42') zugewandten Seite des Sattelauflegers (14) angeordnet sind.

13. Fahrbare Arbeitsmaschine nach Anspruch 12, **dadurch gekennzeichnet, dass** die sattelauflegerfesten Lageraugen (56', 56") der den beiden vorderen Stützauslegern (42', 42") zugeordneten Zylinder-Kolbeneinheiten (54',54") in der Nähe der Lagerstelle (48", 48') des jeweils anderen vorderen Stützauslegers (42", 42') angeordnet sind.

14. Fahrbare Arbeitsmaschine nach einem der Ansprüche 10 bis 13, **dadurch gekennzeichnet, dass** das dem Betätigungsmechanismus eines jeden vorderen Stützauslegers (42', 42") zugeordnete Umlenkgetriebe (58', 58") einen mit seinem einen Ende an einem sattelauflegerfesten Gelenk (60', 60") um eine zur Ausstellachse des zugehörigen Stützauslegers (42', 42") parallele Gelenkachse verschwenkbaren Umlenkhebel (62', 62") aufweist, der an seinem anderen Ende Anlenkstellen (64', 64"; 66' 66") aufweist, an denen die Zylinder-Kolbeneinheit (54', 54") sowie das eine Ende einer starren Ausstellstange (68', 68") angelenkt ist, wobei die Ausstellstange (68', 68") mit ihrem anderen Ende an einem im Abstand von der Lagerstelle (48', 48") befindlichen Anlenkstelle (70', 70") des Stützauslegers (42', 42") angelenkt ist.

15. Fahrbare Arbeitsmaschine nach Anspruch 14, **dadurch gekennzeichnet, dass** die am anderen Ende des Umlenkhebels (62', 62") befindliche Anlenkstellen (64', 66'; 64", 66") für die Zylinder-Kolbeneinheit (54', 54") und für die Ausstellstange (68', 68") im Abstand voneinander angeordnet sind.

16. Fahrbare Arbeitsmaschine nach einem Ansprüche 10 bis 15, **dadurch gekennzeichnet, dass** alle Lager- und Gelenkachsen des Betätigungsmechanismus parallel zur Ausstellachse des zugehörigen Stützauslegers (42', 42") ausgerichtet sind.

17. Fahrbare Arbeitsmaschine nach einem der Ansprüche 10 bis 16, **dadurch gekennzeichnet, dass** die Druckmittelzufuhr zu den Zylinder-Kolbeneinheiten (54', 54") in Abhängigkeit von der Winkelstellung des zugehörigen vorderen Stützauslegers (42', 42") oder Umlenkhebels (62', 62") veränderlich ist.

18. Fahrbare Arbeitsmaschine nach Anspruch 17, **dadurch gekennzeichnet, dass** in einer Druckmittelzuführleitung (102) zur Zylinder-Kolbeneinheit (54', 54") ein Drosselventil (104) angeordnet ist, das über ein in einer definierten Winkelstellung des Stützauslegers (42', 42") oder des Umlenkhebels (62', 62") auslösbares Schaltorgan (106) umsteuerbar ist.

19. Fahrbare Arbeitsmaschine nach einem der Ansprüche 10 bis 18, **dadurch gekennzeichnet, dass** die vorderen Stützausleger (42', 42") in einer ersten Abstützstellung gegen einen lösbaren Anschlag (76) und in einer zweiten Abstützstellung gegen einen Endanschlag anliegen.

20. Fahrbare Arbeitsmaschine nach einem der Ansprüche 1 bis 19, **dadurch gekennzeichnet, dass** die die Stützkonstruktion (38) bildenden Stützausleger (42', 42"; 44) und die Arbeitsmaschine an mindestens einem mit dem Sattelaufleger (14) starr verbundenen Aufbaurahmen angeordnet sind.

21. Fahrbare Arbeitsmaschine nach einem der Ansprüche 1 bis 20, **dadurch gekennzeichnet, dass** die Arbeitsmaschine als Betonpumpe ausgebildet ist, die ein auf dem Sattelaufleger (14) oder dem Aufbaurahmen angeordnetes Pumpaggregat (36) mit Materialaufgabebehälter (34) sowie eine an den Druckausgang des Pumpaggregats (36) angeschlossene, über einen Verteilermast (30) geführte Förderleitung (32) aufweist.

## Claims

1. Mobile work machine having a chassis (10) that is designed as a tractor-trailer, a multi-axle tractor unit (12) and a multi-axle semi-trailer (14) that carries the work machine and is connected with the tractor unit by means of a fifth-wheel coupling (16), having a support construction (38) that is disposed in the region of the semi-trailer (14) and can be supported on a surface, raising the tractor-trailer, which construction has two front support booms (42', 42") disposed at bearing locations (48', 48") on the tractor unit end of the semi-trailer (14), symmetrical to the longitudinal chassis axis, which can be pivoted between a transport position and at least one support position, by means of a hydraulically driven activation mechanism, in each instance, and two rear support booms (44) that can be pivoted between a transport position and at least one support position, whereby the semi-trailer (14) has means for raising and/or holding the tractor unit (12) in place,
**characterized in that** the bearing locations (48', 48") of the front support booms (42', 42") have a continuous, axis-central cavity (80), and that the means disposed on the semi-trailer (14) for raising and holding the tractor unit in place each have a lifting element (82) that passes through the central cavity (80) of the bearing locations (48', 48"), from top to bottom, and can be releasably fixed in place on the tractor unit (12).

2. Mobile work machine according to claim 1,
**characterized in that** the cavity (80) is disposed in a bearing pin (81) that is fixed in place on the support boom.

3. Mobile work machine according to claim 1 or 2,
**characterized in that** the lifting elements (82), which can be raised and lowered by means of a motor (84), in each instance, carry a coupling organ (88) at their lower end, and that the tractor unit (12) carries an auxiliary frame (90) on which the coupling organs (86) of the lifting elements (82) can be locked in place.

4. Mobile work machine according to claim 3,
**characterized in that** the lifting elements (82) are coupled with the related motor (84) by way of a linear drive (88), in each instance.

5. Mobile work machine according to claim 4,
**characterized in that** the linear drive (88) is configured as a trapezoid thread at its thread parts.

6. Mobile work machine according to one of claims 3 to 5,
**characterized in that** the fifth-wheel coupling (16) has a king pin (18) disposed in the center, and that the auxiliary frame (90) is configured in the shape of an arc, in its outline, and disposed concentric to the axis (92) of the king pin (18), and has multiple locking locations (98) for the coupling organs (86) of the lifting elements (82), disposed at a distance from one another in the circumference direction.

7. Mobile work machine according to claim 6,
**characterized in that** the coupling organs (86) can be fixed in place at the locking locations (98) by means of socket pins (100).

8. Mobile work machine according to claim 6 or 7,
**characterized in that** the coupling organs (86) are configured as oval rings that can be rotated and pivoted on the lifting element (82) and engage into oblong arc-shaped holes (96) of the auxiliary frame (90), and that the locking locations (98) form a hole grid in the auxiliary frame (90), which runs in the circumference direction, on the holes of which the coupling organs (86) can be fixed in place by means of socket pins (100).

9. Mobile work machine according to one of claims 1 to 8,
**characterized in that** in the transport position, the coupling organs (86) can be retracted into the cavity (80) of the related bearing locations (48', 48"), by means of a motor, by way of the lifting element (82).

10. Mobile work machine according to one of claims 1 to 9,
**characterized in that** the activation mechanism of each front support boom (42', 42") has a cylinder/piston unit (54', 54") configured as a hydrocylinder, which extends beyond the face part (52) of the semi-trailer (14), which unit is articulated, at its one end, directly with a bearing eye (56', 56") that is fixed in place on the semi-trailer, and, at its other end, indirectly with the related support boom (42', 42"), by way of a deflection gear mechanism (58', 58").

11. Mobile work machine according to claim 10,
**characterized in that** the cylinder/piston units (54', 54") assigned to the two front support booms (42', 42") are disposed one above the other, on the face (52) of the semi-trailer (14), facing toward opposite sides.

12. Mobile work machine according to claim 10 or 11,
**characterized in that** the bearing eyes (56', 56") of the cylinder/piston units (54', 54") assigned to the two front support booms (42', 42"), which eyes are fixed in place on the semi-trailer, are disposed on the side of the semi-trailer (14) that faces the other front support boom (42", 42'), in each instance.

13. Mobile work machine according to claim 12,
**characterized in that** the bearing eyes (56', 56") of the cylinder/piston units (54', 54") assigned to the two front support booms (42', 42"), which eyes are fixed in place on the semi-trailer, are disposed in the vicinity of the bearing location (48", 48') of the other front support boom (42", 42'), in each instance.

14. Mobile work machine according to one of claims 10 to 13, **characterized in that** the deflection gear mechanism (58', 58") assigned to the activation mechanism of each front support boom (42', 42") has a deflection lever (62', 62") that can be pivoted about an articulation axis parallel to the extension axis of the related support boom (42', 42"), on an articulation (60', 60") that is fixed in place on the semi-trailer, with its one end, which lever has articulation locations (64', 64" ; 66', 66") at its other end, on which the cylinder/piston unit (54', 54") as well as the one end of a rigid extension rod (68', 68") are articulated, whereby the extension rod (68', 68") is articulated, with its other end, on an articulation location (70', 70") of the support boom (42', 42") disposed at a distance from the bearing location (48', 48").

15. Mobile work machine according to claim 14,
**characterized in that** the articulation locations (64', 66'; 64", 66") for the cylinder/piston unit (54', 54") and for the extension rod (68', 68"), which are situated at the other end of the deflection lever (62', 62"), are disposed at a slight distance from one another.

16. Mobile work machine according to one of claims 10 to 15, **characterized in that** all the bearing and articulation axes of the activation mechanism are oriented parallel to the extension axis of the related support boom (42', 42").

17. Mobile work machine according to one of claims 10 to 16, **characterized in that** the feed of pressure agent to the cylinder/piston unit (54', 54") can be changed as a function of the angular position of the related front support boom (42', 42") or deflection lever (62', 62").

18. Mobile work machine according to claim 17, **characterized in that** a throttle valve (104) is disposed in a pressure agent feed line (102) to the cylinder/piston unit (54', 54"), which valve can be controlled by way of a switching organ (106) that can be triggered in a defined angular position of the support boom (42', 42") or of the deflection lever (62', 62").

19. Mobile work machine according to one of claims 10 to 18, **characterized in that** the front support booms (42', 42") lie against a releasable stop (76) in a first support position, and against an end stop in a second support position.

20. Mobile work machine according to one of claims 1 to 19, **characterized in that** the support booms (42', 42" ; 44) that form the support construction (38), and the work machine, are disposed on at least one superstructure frame rigidly connected with the semi-trailer (14).

21. Mobile work machine according to one of claims 1 to 20, **characterized in that** the work machine is configured as a concrete pump that has a pump unit (36) disposed on the semi-trailer (14) or on the superstructure frame, having a material application container (34) and a feed line (32) that is connected with the pressure output of the pump unit (36), guided by way of a distributor mast (30).

## Revendications

1. Engin de travail mobile avec un châssis (10) réalisé comme un train routier articulé, présentant un véhicule tracteur à plusieurs essieux (12) et un semi-remorque (14) à plusieurs essieux relié à celui-ci à l'aide d'une sellette d'attelage (16), portant l'engin de travail, avec une construction d'appui (38) disposée dans la zone du semi-remorque (14), pouvant être en appui en levant le semi-remorque sur un fond, laquelle construction présente deux bras supports (42', 42") avant pouvant pivoter chacun sur des points d'appui (48', 48") disposés de manière symétrique à l'axe longitudinal du châssis sur l'extrémité côté véhicule tracteur du semi-remorque (14) entre une position de transport et au moins une position d'appui à l'aide d'un mécanisme d'actionnement entraîné par voie hydraulique et deux bras supports (44) arrière pouvant pivoter entre une position de transport et au moins une position d'appui, sachant que le semi-remorque (14) présente des moyens pour lever et retenir l'engin de travail (12), **caractérisé en ce que** les points d'appui (48', 48") des bras supports avant (42', 42") présentent une cavité (80) traversante, dans l'axe et **en ce que** les moyens disposés sur le semi-remorque (14) pour lever et retenir le véhicule tracteur présentent chacun un organe de levage (82) pouvant être fixé de manière amovible sur le véhicule tracteur (12), traversant de haut en bas la cavité centrale (80) du point d'appui (48', 48").

2. Engin de travail mobile selon la revendication 1, **caractérisé en ce que** la cavité (80) est disposée dans un tourillon (81) fixé au bras support.

3. Engin de travail mobile selon la revendication 1 ou 2, **caractérisé en ce que** les organes de levage (82) levables et abaissables à l'aide d'un moteur (84) portent un organe de couplage (88) sur leur extrémité inférieure et **en ce que** le véhicule tracteur (12) porte un cadre auxiliaire (90), sur lequel les organes de couplage (86) des organes de levage (82) peuvent être bloqués.

4. Engin de travail mobile selon la revendication 3, **caractérisé en ce que** les organes de levage (82) sont couplés par un mécanisme fileté (88) au moteur afférent (84).

5. Engin de travail mobile selon la revendication 4, **caractérisé en ce que** le mécanisme fileté (88) est réalisé sur ses parties filetées comme un filet trapézoïdal.

6. Engin de travail mobile selon l'une quelconque des revendications 3 à 5, **caractérisé en ce que** la sellette d'attelage (16) présente un pivot central (18) disposé au milieu, et **en ce que** le contour du cadre auxiliaire (90) est réalisé en forme de cercle partiel et le cadre auxiliaire (90) est disposé de manière concentrique à l'axe (92) du pivot central (18) et présente plusieurs points d'arrêt (98) disposés dans le sens périphérique à distance les uns des autres pour les organes de couplage (86) des organes de levage (82).

7. Engin de travail mobile selon la revendication 6, **caractérisé en ce que** les organes de couplage (86) peuvent être fixés à l'aide de boulons embrochables (100) sur les points d'arrêt (98).

8. Engin de travail mobile selon la revendication 6 ou 7, **caractérisé en ce que** les organes de couplage (86) sont réalisés comme des anneaux ovales disposés de manière à pouvoir tourner et pivoter sur l'organe de levage (82) et s'engagent dans des trous oblongs (96) en forme de cercle partiel du cadre auxiliaire (90), et **en ce que** les points d'arrêt (98) forment une trame perforée s'étendant dans le sens périphérique dans le cadre auxiliaire (90), sur les trous de laquelle les organes de couplage (86) peuvent être fixés à l'aide de boulons embrochables (100).

9. Engin de travail mobile selon l'une quelconque des revendications 1 à 8, **caractérisé en ce que** les organes de couplage (86) sont insérés dans la position de transport de manière motorisée par l'organe de levage (82) dans la cavité (80) des points de palier (48', 48") afférents.

10. Engin de travail mobile selon l'une quelconque des revendications 1 à 9, **caractérisé en ce que** le mécanisme d'actionnement de chaque bras support (42', 42") avant présente une unité à piston et cylindre (54', 54") réalisée comme un vérin hydraulique, s'étendant sur une partie de côté frontal (52) du semi-remorque (14), laquelle unité est articulée sur une extrémité directement à un oeil de palier (56', 56") fixé sur le semi-remorque et sur son autre extrémité indirectement par une boîte de transmission intermédiaire (58', 58") au bras support (42', 42") afférent.

11. Engin de travail mobile selon la revendication 10, **caractérisé en ce que** les unités à piston et cylindre (54', 54") associées aux deux bras supports (42', 42") avant sont disposées l'une au-dessus de l'autre tournées vers des côtés opposés sur le côté frontal (52) du semi-remorque (14).

12. Engin de travail mobile selon la revendication 10 ou 11, **caractérisé en ce que** les yeux de palier (56', 56") fixés au semi-remorque des unités à piston et cylindre (54', 54") associées aux deux bras supports (42', 42") avant sont disposés sur le côté tourné vers l'autre bras support (42", 42') avant respectif du semi-remorque (14).

13. Engin de travail mobile selon la revendication 12, **caractérisé en ce que** les yeux de palier (56', 56") fixés au semi-remorque des unités à piston et cylindre (54', 54") associées aux deux bras supports (42', 42") avant sont disposés à proximité du point de palier (48", 48') de l'autre bras support (42", 42') avant respectif.

14. Engin de travail mobile selon l'une quelconque des revendications 10 à 13, **caractérisé en ce que** la boite de transmission intermédiaire (58', 58") associée au mécanisme d'actionnement de chaque bras support (42', 42") avant présente un levier de renvoi (62', 62") pouvant pivoter autour d'un axe d'articulation parallèle à l'axe de projection du bras support (42', 42") afférent avec son extrémité sur une articulation (60', 60") fixée au semi-remorque, lequel levier de renvoi présente sur son autre extrémité des points d'articulation (64', 64" ; 66', 66"), auxquels l'unité à piston et cylindre (54', 54") ainsi qu'une extrémité d'une tige de projection (68', 68") rigide est articulée, sachant que la tige de projection (68', 68") est articulée avec son autre extrémité sur un point d'articulation (70', 70") se trouvant à distance du point de palier (48', 48") du bras support (42', 42").

15. Engin de travail mobile selon la revendication 14, **caractérisé en ce que** les points d'articulation (64', 66' ; 64", 66") se trouvant sur l'autre extrémité du levier de renvoi (62', 62") pour l'unité à piston et cylindre (54', 54") et pour la tige de projection (68', 68") sont disposés à distance les uns des autres.

16. Engin de travail mobile selon l'une quelconque des revendications 10 à 15, **caractérisé en ce que** tous les axes de palier et d'articulation du mécanisme d'actionnement sont orientés parallèlement à l'axe de projection du bras support (42', 42") afférent.

17. Engin de travail mobile selon l'une quelconque des revendications 10 à 16, **caractérisé en ce que** l'amenée de moyen de pression aux unités à piston et cylindre (54', 54") est modifiable en fonction de la position angulaire du bras support avant afférent (42', 42") ou levier de renvoi (62', 62").

18. Engin de travail mobile selon la revendication 17, **caractérisé en ce qu'**une soupape d'étranglement (104) qui peut être inversée par un organe de commutation (106) pouvant être déclenché dans une position angulaire définie du bras support (42', 42") ou du levier de renvoi (62', 62"), est disposée dans une conduite d'amenée de moyen de pression (102) à l'unité à piston et cylindre (54', 54".

19. Engin de travail mobile selon l'une quelconque des revendications 10 à 18, **caractérisé en ce que** les bras supports (42', 42") avant reposent dans une première position d'appui contre une butée amovible (76) et dans une seconde position d'appui contre une butée finale.

20. Engin de travail mobile selon l'une quelconque des revendications 1 à 19, **caractérisé en ce que** les bras supports (42', 42" ; 44) formant la construction d'appui (38) et l'engin de travail sont disposés sur au moins un cadre de montage relié de manière rigide au semi-remorque (14).

21. Engin de travail mobile selon l'une quelconque des revendications 1 à 20, **caractérisé en ce que** l'engin de travail est réalisé comme une pompe à béton qui présente un groupe motopompe (36) disposé sur le semi-remorque (14) ou le cadre de montage avec un récipient de chargement de matériau (34) ainsi qu'une conduite de refoulement (32) raccordée à la sortie de pression du groupe motopompe (36), guidée par un mât distributeur (30).
